# EUROPÄISCHE PATENTSCHRIFT

(11) **EP 0 657 043 B1**
(45) Veröffentlichungstag und Bekanntmachung des Hinweises auf die Patenterteilung: **05.03.1997**
(21) Anmeldenummer: 92918671.6
(22) Anmeldetag: 31.08.1992
(51) Int. Cl.: G05B 19/4093, G05B 19/414

(54) **KONFIGURIERBARER MENSCH-MASCHINE-KOMMUNIKATIONSBEREICH FÜR WERKZEUGMASCHINEN- ODER ROBOTERSTEUERUNGEN**
CONFIGURABLE MAN-MACHINE COMMUNICATION STRUCTURE FOR MACHINE TOOL OR ROBOT CONTROL SYSTEMS
STRUCTURE DE COMMUNICATION HOMME-MACHINE CONFIGURABLE POUR SYSTEMES DE COMMANDE DE MACHINES-OUTILS OU DE ROBOTS

(43) Veröffentlichungstag der Anmeldung: 14.06.1995
(73) Patentinhaber: SIEMENS AKTIENGESELLSCHAFT, 80333 München (DE)
(72) Erfinder: MÜHLFELD, Reinhard, D-8510 Fürth (DE); SCHUSSLER, Ernest, D-8520 Erlangen (DE)
(86) Internationale Anmeldenummer: DE9200722
(87) Internationale Veröffentlichungsnummer: WO9301703

(56) Entgegenhaltungen:
- EP-A- 0 233 949
- EP-A- 0 262 922
- EP-A- 0 298 396
- EP-A- 0 304 071
- EP-A- 0 311 703
- US-A- 4 635 208
- COMPUTERS IN INDUSTRY Bd. 14, Nr. 1/3, Mai 1990, AMSTERDAM NL Seiten 109 - 116 F.-L. KRAUSE
- MANUFACTURING TECHNOLOGY INTERNATIONAL Nr. 1, 1987, LONDON GB Seiten 66 - 69
- MANUFACTURING TECHNOLOGY INTERNATIONAL Nr. 1, 1987, LONDON GB Seiten 249 - 252 K.J. LINDSAY
- VDI-Z 133, Nr. 12, Dezember 1991, Seiten 60, 63-65, Jürgen Schmidt et al. "Objektorientierte Projektierung von Steuerungssoftware"

## Beschreibung

Die Erfindung bezieht sich auf eine numerische Steuerung für Werkzeugmaschinen oder Roboter, bei der eine objektorientierte Programmierung erfolgt, indem Objektklassen vorgesehen sind, von denen jeweils eine Anzahl von Objekten gebildet werden kann, und wobei ein Botschaftsmechanismus zur Kommunikation mit anderen Objekten besteht.

Derartige Steuerungen sind aus VDI-Z 133, Nr. 12, Dezember 1991, Jürgen Schmidt et al. ,,Objektorientierte Projektierung von Steuerungssoftware", Seiten 60 und 63-65, bekannt.

Die steigende Anwendungsvielfalt moderner numerischer Steuerungssysteme (CNC) für Werkzeugmaschinen oder Roboter geht Hand in Hand mit der Notwendigkeit zur anwendungsorientierten Gestaltung des CNC-Systemverhaltens. Insbesondere die Mensch-Maschine-Kommunikation und die dazugehörende Informationsaufbereitung unterstehen diesen wachsenden Flexibilitätsanforderungen.

Steuerungssysteme die eine anwenderspezifische Gestaltung erlauben und in diesem Sinne als "projektierbar" bezeichnet werden, weisen definierte Freiheitsgrade auf, die zielgerichtete Konfigurationseingriffe im Anwendungsumfeld erlauben. Die Ausrichtung des Systemverhaltens auf die eigentliche Endanwendung erfolgt im allgemeinen in aufeinander abgestimmten Konfigurationsphasen durch unterschiedliche Zielgruppen, d.h. im speziellen Fall der CNC-Steuerungstechnik ausgehend vom Steuerungshersteller, über den Maschinenhersteller bis hin zum Maschinenendanwender.

Aus technischer Sicht besteht somit die Forderung, auf neue Weise arbeitende Steuerungssysteme zu schaffen, die zunächst einen universellen Charakter aufweisen und die dann global und später lokal auf die eigentliche Endaufgabe zugeschnitten werden. Um den Konfigurationsvorgang effektiv abwickeln zu können, müssen die Gesamtanforderungen mit den entsprechenden Realisierungsmitteln bedarfsgerecht auf die beteiligten Zielgruppen aufgeteilt werden. Bedarfsgerecht heißt im wesentlichen, daß das Ausmaß der notwendigen Instrumentierung, die Mächtigkeit der integrierten Konfigurationswerkzeuge und die Granularität der Eingriffsmöglichkeiten jeweils in Einklang mit den Bedürfnissen der angesprochenen Zielgruppe gebracht werden müssen.

Bisherige Ansätze zur Konfiguration von projektierbaren CNC-Steuerungssystemen konzentrieren sich üblicherweise auf die indirekte Beeinflussung des Systemverhaltens. So werden vom Steuerungshersteller in der Entwicklungsphase Systemschnittstellen definiert, die mittels integrierten oder externen Konfigurationswerkzeugen angesprochen werden können. Die zur Verfügung gestellten Mittel erlauben im einfachsten Fall das Abbilden anwendungsspezifischer Parameter (z.B. Maschinenparameter) auf interne Systemparameter, im weiteren die Ablage von verschlüsselten Beschreibungsdaten (z.B. Bildschirmlayout, Bedienfolgen, etc.) oder auch sprachorientierter Kommandosequenzen (z.B. Arbeitszyklen) die während der Systemlaufzeit interpretiert werden. Die Mächtigkeit der eingesetzten Konfigurationswerkzeuge erstreckt sich von einfachen Tabelleneditoren bis hin zu vorgelagerten Compilerlösungen die auch das Einbringen anwendungsspezifischer Algorithmen erlauben. Eine zielgruppenorientierte Abstufung der Eingriffsmöglichkeiten im Anwendungsumfeld wird z.T. implizit durch die systemexterne Ansiedlung der notwendigen Konfigurationsmittel oder auch systemintern durch hierarchische Zugriffsmechanismen erreicht.

Bezeichnend für bisherige Lösungen ist die Tatsache, daß das eigentliche Systemverhalten nicht direkt modifizierbar ist, weil die grundlegenden Hardware-, Daten- und Programmstrukturen unterhalb der Konfigurationsschnittstellen durch die üblichen Implementierungsansätze starr vorgegeben sind. Desweiteren ist zu bemerken, daß herkömmliche Konfigurationsschnittstellen im allgemeinen einen zu geringen Systemabstraktionsgrad aufweisen um z.B. für OEM-Anwendungen (Original Equipment Manufacturing) offengelegt zu werden und zuletzt auch keine Möglichkeit anbieten um technologische Anwendungsspezifika abzubilden, die nicht algorithmisch formulierbar sind (z. B. technologische Erfahrungswerte).

Ferner sei noch auf die EP-A-0 289 391 verwiesen, die als Hintergrund zum Stand der Technik eine modulare aufgebaute numerische Steuerung zeigt, die allerdings keine einfache Änderung der Konfiguration zuläßt. Desweiteren ist aus der EP-A-0 304 071 eine in sehr allgemeinem Sinn von einer konkreten Anwendung losgelöste Datenverarbeitungsanlage in einer objektorientierten Systemumgebung bekannt, aus der der Fachmann allerdings keinen Hinweis entnehmen kann, ein solches System für eine numerische Steuerung, insbesondere eine Werkzeugmaschinen- oder Robotersteuerung, einzusetzen. Dieses Dokument wendet sich an den Fachmann für Datenverarbeitungsanlagen, beispielsweise für Textverarbeitung oder Datenbankanwendungen, weil dabei der gezielte Austausch von Daten innerhalb verschiedener Datenverarbeitungsprogramme erleichtert werden soll.

Aufgabe der Erfindung ist es, eine numerische Steuerung für Werkzeugmaschinen oder Roboter zu schaffen, deren zunächst universelle Ausprägung im Bereich der Mensch-Maschine-Kommunikation möglichst einfach auf beliebige Anwendungsfälle zugeschnitten werden kann, wobei die dazugehörende Informationsaufbereitung zu Steuerdaten führt, die von einem integrierten numerischen Steuerungskern universell verarbeitet werden können und somit die Ansteuerung der Maschinenoder Roboterantriebe inklusive der Peripherie gewährleistet.

Diese Aufgabe wird für eine Steuerung der eingangs genannten Art durch die folgenden Merkmale gelöst:
1.1. einer Mensch-Maschine Schnittstelle, einer Ablaufsteuerung und aus in Software oder in Soft- und Hardware aus gebildeten Objektklassen für abstrakte Bearbeitungs-, Geometrie-, Kinematik-, Technologiedatentypen etc.
1.2. eine spezielle Objektklasse für abstrakte Steuerdatentypen in Verbindung mit einem integrierten numerischen Steuerungskern, der als Objektklasse ausgebildet sein kann,
1.3. wobei von jeder nicht speziellen Objektklasse eine beliebige Anzahl von Objekten gebildet werden kann, wobei jedes Objekt einen eigenen Datenbereich, einen Prozedur teil zur Ausführung entweder einer oder mehrerer Bearbeitungs-, Geometrie-, Kinematik- oder Technologiemethoden etc. und einen Botschaftenmechanismus zur Kommunikation mit anderen Objekten aufweist,
1.4. wobei von der Objektklasse der Steuerdatentypen eine beliebige Anzahl von Objekten gebildet werden kann, die eine oder mehrere Steuerdatenerzeugungsmethoden aufweisen,
1.5. die über die Mensch-Maschine-Schnittstelle eingegebenen Benutzerinformationen werden von der Ablaufsteuerung interpretiert und führen zu einer Aktivierung der jeweils ausgewählten Objekte,
1.6. die aktivierten Objekte tauschen die gegenseitig benötigten Informationen über ihren Botschaftenmechanismus aus, wobei die aktivierten Objekte ihren Anteil zustandsabhängig, d. h. abhängig von den Zuständen wie z. B. Vollständigkeit der Daten, Datenfreigabe etc., direkt oder mittels weiterer Objekte zur Steuerdatenerzeugung beitragen und somit durch die netzwerkartige Verknüpfung der Objekte - wobei die Objekte die Knoten, die Methoden und der Botschaftenmechanismus die Verbindungslinien zwischen den Knoten darstellen - eine ablauffähige Funktionseinheit für die numerische Steuerung bilden,
1.7. die Ablaufsteuerung selbst als Objektklasse ausgebildet ist, deren Objekte über Methoden verfügen, die die zustandsabhängige Interpretation einer abstrakten Beschreibung des Bedienablaufs aus der steuerungsinternen Datenhaltung erlauben.

Die Ablaufsteuerung selbst ist als Objektklasse ausgebildet, deren Objekte die zustandsabhängige Interpretation einer abstrakten Beschreibung des Bedienablaufs aus der steuerungsinternen Datenhaltung erlauben, womit der Bedienablauf leicht mittels einer Änderung der angesprochenen abstrakten Beschreibung modifizierbar wird.

Nach einer vorteilhaften Ausbildung der Erfindung ist jedem Objekt ein Visualisierungsteil zuordbar, bei dessen Aktivierung ein jeweiliges Objekt Visualisierungsanforderungen an die Bedienoberfläche der Mensch-Maschine-Schnittstelle stellen kann oder seine objekteigenen Daten optional editierbar darstellen kann. Damit läßt sich einerseits eine leichte Auswahl der benötigten Objekte erreichen, andererseits können über die Bedienoberfläche die Eigenschaften und Daten der Objekte leicht modifiziert werden.

Das Gesamtsystem der numerischen Steuerung läßt durch die spezifische Ausbildung der Objektklassen bzw. Objekte eine Ausprägung auf beliebige Anforderungen im Bereich der Mensch-Maschine-Kommunikation zu, wobei jede Ausprägung zu einer in sich geschlossenen Steuerungsvariante mit einer eigenständigen technischen Wirkung führt, ohne daß jeweils nicht benötigte Elemente des Gesamtsystems als Ballast soft- bzw. hardwaremäßig mitgeführt bzw. mit abgearbeitet werden müssen.

Für ein anwenderfreundliches Steuerungssystem ist es weiterhin vorteilhaft, alle Objektklassen unter Einbeziehung der Ablaufsteuerung in der steuerungsinternen Datenhaltung als abstraktes Datenmodell so abzubilden, daß es durch abstrakte anwendungsspezifische Datentypen ergänzbar ist bzw. durch anwendungsspezifische Objektausprägungen modifizierbar ist. Damit kann auf Besonderheiten von Werkzeug- und Robotersteuerungen anwenderseitig eingegangen werden, auch wenn der Steuerungshersteller dafür im einzelnen nur die grundlegenden Vorkehrungen getroffen hat, wenn also beispielsweise zunächst nur eine universelle Ausprägung der Objektklassen und Objekte bzw. deren Abbildung im abstrakten Datenmodell im Basissystem zur Verfügung gestellt wurde, die der Anwender z.B. durch Kopieren und Ändern mittels geeigneter Editoren modifizieren kann und in Verbindung zum Ablaufsystem setzen kann.

Nach einer weiteren vorteilhaften Ausbildung der Erfindung kann der Benutzer, d.h. der Steuerungshersteller selbst, der Maschinenhersteller oder der Maschinenanwender, die Freigabe der möglichen Objektkombinationen, die für die jeweilige Aufgabe an der Werkzeugmaschine anwendbar sind, anwendungsspezifisch mit Zugriffsmechanismen versehen, die die Möglichkeit von Fehlkonfigurationen im anvisierten Anwendungsumfeld ausschließen.

Ein Ausführungsbeispiel der Erfindung wird im folgenden anhand der Zeichnung dargestellt. Dabei zeigen:
- FIG 1: zwei äquivalente Darstellungen eines Objektes O,
- FIG 2: Objektexemplare O für Ablaufsteuerung A, Bearbeitung B, Geometrie G, Kinematik K, Technologien T, Steuerdaten S,
- FIG 3: eine werkstückspezifische Ausprägung von Objekten für einen ersten Fertigungsabschnitt anhand einer Werkstattzeichnung eines Drehteils,
- FIG 4: eine werkstückspezifische Ausprägung von Objekten für einen zweiten Fertigungsabschnitt.

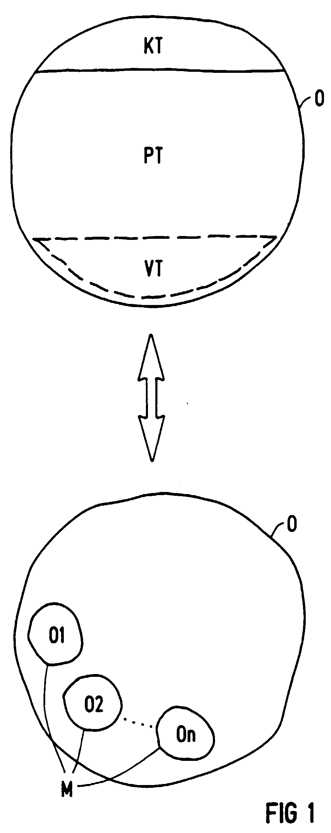

FIG 1 zeigt den prinzipiellen Aufbau eines Objektes O als Exemplar eines Moduls bzw. einer Objektklasse. Ein solches Objekt 0 stellt den Grundbaustein für die Mensch-Maschine-Kommunikation einer numerischen Werkzeugmaschinen- bzw. Robotersteuerung dar und kann in Soft- oder in Soft- und Hardware realisiert sein. Es hat also zunächst keine konkrete Ausführungsform und ist deshalb (in Anlehnung an die Mengenlehre) durch einen von Hand gezeichneten Kreis dargestellt. Es verfügt über einen übersichtshalber nicht gezeichneten eigenen Datenbereich, über einen Kommunikationsteil KT und einen Prozedurteil PT und, fakultativ (durch gestrichelte Linien angedeutet) über einen Visualisierungsteil VT. Der Prozedurteil PT und der fakultative Visualisierungsteil VT bestehen aus einer oder mehreren O1 bis On Software-Prozeduren bzw. Methoden M, die beispielsweise eine oder mehrere Bearbeitungsmethoden, eine oder mehrere Geometriemethoden, eine oder mehrere Kinematikmethoden oder eine oder mehrere Technologiemethoden, etc. ausführen und fakultiv Visualisierungsanforderungen stellen können. Die Ausführung dieser Methoden M bzw. Funktionen könnten aber ebenso von einer Hardware-Logik vorgenommen werden, so daß der Prozedurteil PT teilweise in Hardware realisiert wäre. Die Vermittlung zwischen dem Prozedurteil PT und der Außenwelt des Objektes übernimmt der Kommunikationsteil KT. Der Kommunikationsteil KT ist in der Regel für die Verständigung mit den Kommunikationsteilen KT anderer Objekte 0 zuständig. Spezielle Objekte sind für die modellübergreifende Kommunikation zuständig, wie z.B. das Objekt Ablaufsteuerung. In einer herkömmlichen Datenverarbeitungsanlage wird diese Verständigung in der Regel über ein Bussystem vorgenommen, wenn die Module in unterschiedlichen Hardware-Baugruppen räumlich getrennt sind. Der Kommunikationsteil KT kann so ausgeprägt sein, daß er mit der Außenwelt in einer abstrakten Hochsprache und mit dem Prozedurteil PT in einer maschinennahen Sprache kommuniziert.

Durch eine Vielzahl von Objektklassen und deren Objektexemplaren lassen sich alle Aufgaben der Mensch-Maschine-Kommunikation in einer beliebigen Werkzeugmaschinen- bzw. Robotersteuerung abdecken. Dabei kann z.B. die Werkzeugmaschinensteuerung die werkstattorientierte Programmierung (WOP) zur Steuerung einer einfachen Drehmaschine unterstützen oder auch die flexible Fertigung im Fabrikverbund (FMS) umfassen. Sollten zu den bisher üblichen Aufgaben einer Werkzeugmaschine- bzw. Robotersteuerung in Zukunft weitere neue Aufgaben im Bereich der Mensch-Maschine-Kommunikation hinzukommen, z.B. die Einbeziehung eines Expertensystems zur Schnittwerteermittlung, so müssen lediglich eine oder mehrere weitere Objektklassen bzw. Objektexemplare geschaffen werden, die die entsprechenden Methoden zur Verfügung stellen.

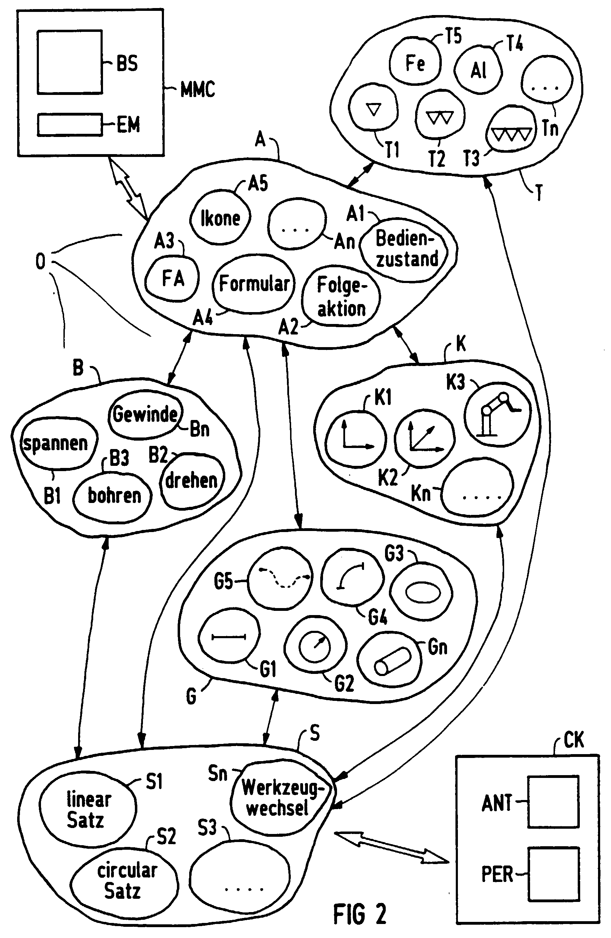

In FIG 2 sind insgesamt sechs beispielhafte Objektexemplare 0, die über mehrere Methoden zur werkstattorientierten Programmierung (WOP) verfügen, dargestellt. Dabei besteht das Objekt für die Ablaufsteuerung A aus den Methoden Al bis An, das Bearbeitungsobjekt B aus den Methoden B1 bis Bn, das Geometrieobjekt G aus den Methoden G1 bis Gn, das Kinematikobjekt K aus den Methoden K1 bis Kn, das Technologieobjekt T aus den Methoden T1 bis Tn und das Objekt zur Steuerdatenerzeugung S aus den Methoden S1 bis Sn. Jedes einzelne Objekt hat einen eigenen Datenbereich, der nicht explizit dargestellt ist. Außerdem ist eine Mensch-Maschine-Schnittstelle MMC gezeigt, die einen Bildschirm BS und ein oder mehrere Eingabemittel EM aufweist. Durch einen Doppelpfeil von der Mensch-Maschine-Schnittstelle MMC zum Objekt Ablaufsteuerung A ist angedeutet, daß die Ablaufsteuerung A zum einen die eingegebene Benutzerinformationen interpretiert und bei Bedarf mittels entsprechender Botschaften über den Kommunikationsteil KT den anderen Objekten B, G, K, T oder S weiterleitet, zum anderen die Ansteuerung des Bildschirms BS, der ein Grafikbildschirm sein kann, z.B. auf Anforderung des Visualisierungsteils VT anderer Objekte gewährleistet. Zu diesem Zweck verfügt das Objekt Ablaufsteuerung A auch über Methoden zur Interpretation der abstrakten Beschreibung von Bedienoberflächenelementen wie beispielsweise Menübäume, Formulare, Ikonen oder Grafiken etc., die in der nicht explizit dargestellten steuerungsinternen Datenhaltung abgelegt sind.

In FIG 2 wurde bei den in den einzelnen Objekten A, B, G, K, T, S, gezeigten Methoden der Übersichtlichkeit halber auf die aus FIG 1 bekannte Einteilung der Objekte nach KT, PT, VT verzichtet, so daß lediglich von Hand gezeichnete Kreise gezeigt sind, deren Inhalte teilweise durch Symbole angedeutet sind, die auf die jeweilige Funktion der Methode verweisen.

So verfügt das Objekt Ablaufsteuerung A über die Methoden A1 bis An, die zur Steuerung und Visualisierung des Bedienablaufs benötigt werden: die Methode A1 beispielsweise zur Erfassung des aktuellen Bedienzustands, die Methode A2 um weitere Aktionen z.B. Zustandsübergänge einzuleiten, die Methode A3 zur Verwaltung der Fertigungsabschnitte FA, die Methoden A4 bis An um die Visualisierung spezifischer Elemente der Bedienoberfläche wie Formulare, Ikonen oder Grafiken etc. aufzubereiten.

Das Bearbeitungsobjekt B, das über die Bearbeitungsmethoden B1 bis Bn verfügt, legt das Bearbeitungsverfahren und die zum Einsatz kommenden Werkmittel für einen definierten Fertigungsabschnitt fest, also beispielsweise B1 die Aufspannung (z.B. Spannpratzen), B2 eine Drehbearbeitung (z.B. Plandrehen), B3 eine Bohrbearbeitung (z.B. Tieflochbohren) und Bn eine Gewindebearbeitung (z.B. Gewindebohren) jeweils in Abhängigkeit der eingesetzten Werkzeuge.

Das Geometrieobjekt G beinhaltet die Geometriemethoden G1 bis Gn, die Modellierungsprozeduren für Geraden G1, Kreise G2, Ellipsen G3, Kurvenstücke G4, Positionierungskoordinaten G5 realisieren, um beispielsweise eine rechnerinterne Darstellung der am Fertigungsprozess beteiligten Geometriekörper zu erzeugen. Auch dreidimensionale Geometrien, wie beispielsweise Zylinderformen Gn, sind modellierbar. (Die Zylinderform Gn steht stellvertretend für alle anderen möglichen dreidimensionalen geometrischen Operationen).

Das Kinematikobjekt K besitzt die Methoden K1 bis Kn für verschiedene kinematische Bewegungen von Werkzeugmaschinen oder Robotern, wobei die Methode K1 die Funktion einer zweiachsigen Bewegung, die Methode K2 die einer dreiachsigen Bewegung und die Methode K3 eine spezifische Roboterbewegung berücksichtigen kann, jeweils im Einklang mit der zur Verfügung stehenden Werkzeugmaschine bzw. mit dem eingesetzten Handhabungssystem.

Das Technologieobjekt T setzt sich aus den Methoden T1 bis Tn zusammen, die für die technologigerechte Ausführung der Bearbeitungsverfahren benötigt werden. So ist beispielsweise durch die auf der Spitze stehenden Dreiecke der Methoden T1 bis T3 symbolisiert, daß diese über alle notwendigen Erfahrungsprozedere zur Oberflächenbearbeitung von Werkstücken verfügen, wie z.B. Schruppen-(Methode T1), Schlichten(Methode T2) und Feinschlichten-(Methode T3). Diese Technologiemethoden werden zusätzlich ergänzt durch weitere spezifizierte Angaben, beispielsweise durch "Material"-Methoden T4 und T5 die spezielle Technologieinformationen bezüglich der optimalen Schnittwerte in Abhängigkeit des verwendeten Werkzeugschneidstoffs und des Rohlingsmaterials bereitstellen.

Im Ausführungsbeispiel verfügt das Objekt zur Steuerdatenerzeugung S letztendlich über Methoden, die ausgehend von den Informationen der anderen Objekte A, B, G, K, T zu Steuerdatensätzen führen, die von dem numerischen Steuerungskern CK (control kernel) ausgeführt werden können und somit die Ansteuerung der Antriebe ANT und der Peripherie PER gewährleisten. So erzeugt beispielsweise die Methode S1 einen Datensatz zur linearen Bewegung (linear Satz) einer oder mehrerer Maschinenachsen, die Methode S2 einen entsprechenden Datensatz zur zirkularen Bewegung (circular Satz) und die Methode Sn einen Datensatz zur Ansteuerung eines Werkzeugrevolvers (Werzeugwechsel) an der Maschinenperipherie.

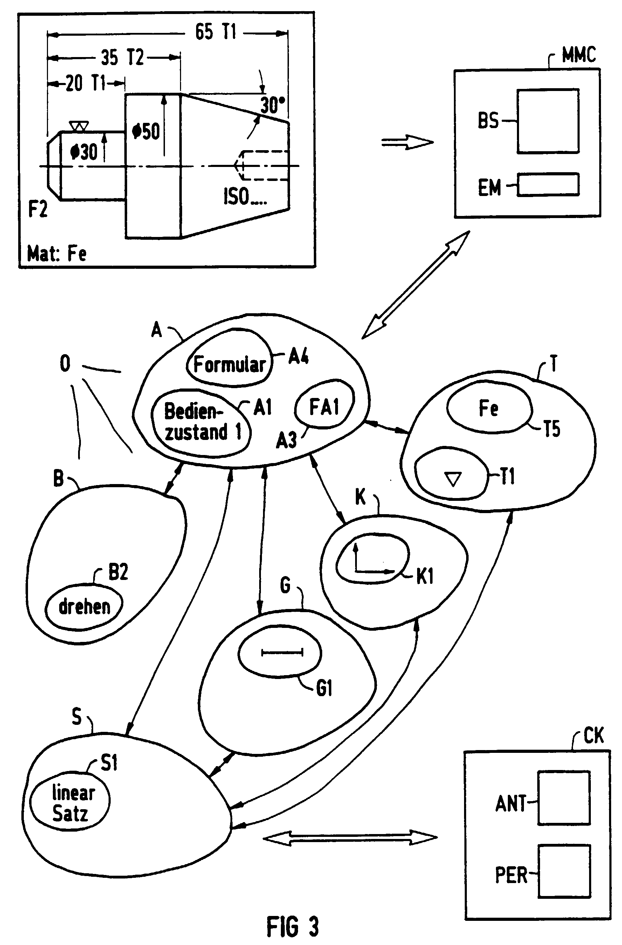

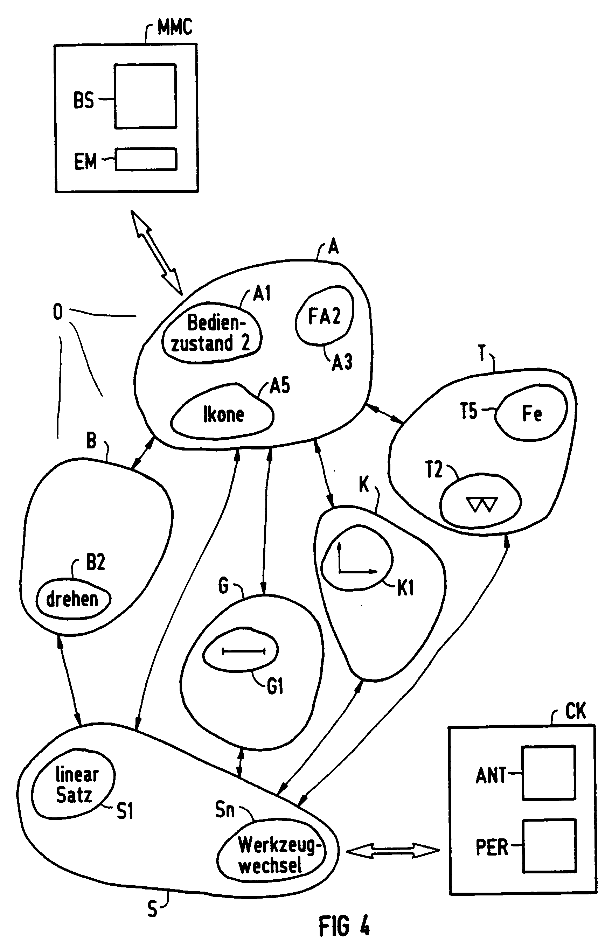

Durch das Zusammenwirken der Methoden A1 bis An, B1 bis Bn, G1 bis Gn, K1 bis Kn, T1 bis Tn und S1 bis Sn in unterschiedlichen Konfigurationsphasen, erhalten die Objekte A, B, G, K, T und S allmählich eine konkrete Ausprägung in Form eines maschinen- und werkstückspezifischen Fertigungsmodells, d.h. eines fertigungstechnischen Abbilds der an der Maschine zu lösenden Fertigungsaufgabe, in einer steuerungsinternen Darstellung. In einer ersten Konfigurationsphase vermittelt zunächst der Steuerungshersteller den Objekten eine universelle Ausprägung, die so wie sie in FIG 2 beispielhaft dargestellt ist, für Drehmaschinen allgemein gültig ist. In einem weiteren Schritt kann der Maschinenhersteller die universelle Ausprägung der Objekte um sein eigenes Erfahrungswissen (know-how) bezüglich seiner Maschine, beispielsweise durch optimierte Werkzeugeinsatzdaten, ergänzen. Die so entstehende Vorprägung der Objekte, die sich in den Objekteigenen Daten wiederspiegelt und deshalb in FIG 2 nicht explizit dargestellt ist, erlaubt nun dem Endanwender mit reduzierten Aufwand, sich auf die Vorgabe der Informationen zu konzentrieren, die seiner speziellen Aufgabe entsprechen, also beispielsweise die werkstattorientierte Programmierung (WOP) eines Drehteils vorzunehmen. Dies wird im folgenden anhand der Figuren 3 und 4 näher beschrieben.

In FIG 3 ist eine Werkstattzeichnung eines teilweise zylindrischen und teilweise kegelstumpfförmigen Drehteils mit den notwendigen Geometrie- und Technologieangaben dargestellt. Diese Werkstattzeichnung wird vom Endanwender der Werkzeugmaschine als Vorlage für die Eingabe über die Mensch-Maschine-Schnittstelle MMC verwendet, wobei die Eingabe über die Eingabemittel EM, beispielsweise über eine Tastatur, erfolgt. Die Mensch-Maschine-Schnittstelle MMC steht in Verbindung zu der Ablaufsteuerung A, welche die für die jeweilige Aufgabe benötigten Objekte über den Bildschirm BS visualisiert und zwar unter Verwendung der steuerungsinternen abstrakten Beschreibung des Bedienablaufs und auf Anforderung der Methoden der Visualisierungsteile VT innerhalb der einzelnen Objekte. Die Objekte 0 können aber auch vollständig mit ihrer konfigurierten Grundausprägung im Hintergrund bleiben. So brauchen beispielsweise für das in FIG 3 gezeigte Drehteil lediglich einige wenige Daten, wie die Aufspannmaße des Rohteils, die Tatsache, daß ein Drehteil gefertigt werden soll, das verwendete Material, die Oberflächengüte und die Maße des Drehteils zusätzlich zu der vorhandenen Basisausprägung der Objekte eingegeben werden. Uber die Mensch-Maschine-Schnittstelle MMC und die Ablaufsteuerung A werden dann für die jeweiligen Fertigungsabschnitte FA aus den verfügbaren Objekten 0 die entsprechenden Methoden M aufgerufen. Die einzelnen Objekte enthalten dann die für die Fertigung des Teils nötigen Informationen in Form einer fertigungsspezifischen Ausprägung der objekteigenen Daten. Das Objekt für die Erzeugung von Steuerdaten S holt sich dann über den Kommunikationsteil diese Information und fügt sie zu einem von dem Werkzeugmaschinen-/Robotersteuerungskern CK verarbeitbaren Datensatz zusammen.

In FIG 3 wird beispielsweise für den Fertigungsabschnitt FA1 über die Ablaufsteuerung A die Geometriemethode G1 für Geraden, die Kinematikmethode K1 für zweiachsige Bearbeitungsvorgänge, die Technologiemethode T5 für das Material Fe sowie T2 für das Schlichtverfahren und die Methode B2 für die Drehbearbeitung ausgewählt. Obwohl aus der Werkstattzeichnung das Doppeldreiecksymbol für Schlichten eingegeben wurde, wird die Ablaufsteuerung A zunächst automatisch in Verbindung mit der vorab konfigurierten Erfahrungsbasis die Technologiemethode T1 für die Oberflächenbearbeitung "Schruppen" aufrufen, da dieser Bearbeitungsschritt vorher ausgeführt werden muß.

Jedes Objekt, das weitere Daten über die Mensch-Maschine-Schnittstelle MMC benötigt, stellt sich zunächst auf dem Bildschirm BS mittels einer Anforderung des Visualisierungsteils VT dar und verlangt die benötigten Daten. So präsentiert sich beispielsweise die Geometriemethode G1, die für Geraden ausgewählt wurde, mit einem Formular in dem die Anfangspunkte und die Endpunkte der zu bearbeitenden Bahn eingegeben werden sollen. Andere Daten können auch direkt aus der vorhandenen Erfahrungsbasis, die sich in der Grundausprägung der vorab konfigurierten Objekte wiederspiegelt, angefordert werden.

Wie durch die Pfeile angedeutet, können die Objekte B, G, K, T, S über die Ablaufsteuerung A miteinander kommunizieren. Die Objekte können aber auch direkt untereinander über ihren Kommunikationsteil KT (FIG 1) miteinander kommunizieren, dies ist der Ubersichtlichkeit halber jedoch nicht durch Pfeile angedeutet.

So benötigt beispielsweise die Methode B2 für die Drehbearbeitung Geometrieformationen vom Geometrieobjekt G, um die Schnittaufteilung korrekt auszuführen oder weil der einzustellende (Maximal-) Vorschub auch vom Durchmesser und anderen geometrischen Daten abhängt.

Wenn alle für den aktuellen Fertigungsabschnitt des Drehteils benötigten Daten eingegeben sind bzw. aus der vorab konfigurierten Erfahrungsbasis ermittelt wurden, wird über die Bedienoberfläche und die Ablaufsteuerung A oder auch automatisch eine Methode S1 des Objekts Steuerdaten S aufgerufen, die über den Kommunikationsteil KT mit den Objekten K, G, ... in Verbindung tritt, um sich von diesen Information zu besorgen um damit das interne Fertigungsmodell zu aktualisieren und daraus einen maschinenspezifischen Datensatz zu generieren, der vom Steuerungsteil CK der Werkzeugmaschine bzw. des Roboters abgearbeitet werden kann; in diesem Fall ein linear Satz.

Ergänzend zu den Benutzereingaben durch den Anwender bildet sich so steuerungsintern durch die Kommunikation der einzelnen Objekte ein ablauffähiges numerisches Steuerungssystem aus, daß die Ausführung eines definierten Fertigungsabschnitts des in FIG 3 gezeigten Drehteils aus dem in der Werkzeugmaschine eingespannten Rohling aufbereitet und in Verbindung mit dem Steuerungskern CK umsetzen kann.

Wie in FIG 4 gezeigt ist, wird von der Ablaufsteuerung in einem zweiten Fertigungsabschnitt FA2 die Objektkonfiguration nur leicht verändert, nämlich indem die Technologiemethode T2 für die endgültige Oberflächenbearbeitung "Schlichten" mittels einer Ikone ausgewählt wird. Damit wird automatisch die Art der Oberflächenbearbeitung durch geänderte Vorschubwerte, die vom Technologieobjekt T ermittelt werden, von der Methode B2 für die Drehbearbeitung berücksichtigt, auch indem ein Werkzeugwechsel mittels der Methode Sn des Objekts Steuerdaten S angestoßen wird.

## Patentansprüche

1. Numerische Steuerung für Werkzeugmaschinen oder Roboter, bei der eine objektorientierte Programmierung erfolgt, indem Ojektklassen vorgesehen sind, von denen jeweils eine Anzahl von Objekten gebildet werden kann, und wobei ein Botschaftsmechanismus zur Kommunikation mit anderen Objekten besteht, **gekennzeichnet durch** die folgenden Merkmale:
1.1 einer Mensch-Maschine-Schnittstelle (MMC), einer Ablaufsteuerung (A) und aus in Software oder in Soft- und Hardware ausgebildeten Objektklassen für abstrakte Bearbeitungs- (B), Geometrie- (G), Kinematik- (K), Technologiedatentypen (T), etc.,
1.2 eine spezielle Objektklasse für abstrakte Steuerdatentypen (S) in Verbindung mit einem integrierten numerischen Steuerungskern (CK), der als Objektklasse ausgebildet sein kann,
1.3 wobei von jeder nicht speziellen Objektklasse eine beliebige Anzahl von Objekten gebildet werden kann, wobei jedes Objekt einen eigenen Datenbereich, einen Prozedurteil (PT) zur Ausführung entweder einer oder mehrerer Bearbeitungs- (B1 bis Bn), Geometrie- (G1 bis Gn), Kinematik- (K1 bis Kn) oder Technologiemethoden (T1 bis Tn) etc. und einen Botschaftenmechanismus zur Kommunikation mit anderen Objekten aufweist,
1.4 wobei von der Objektklasse der Steuerdatentypen (S) eine beliebige Anzahl von Objekten (S1 bis Sn) gebildet werden kann, die eine oder mehrere Steuerdatenerzeugungsmethoden (S1 bis Sn) aufweisen,
1.5 die über die Mensch-Maschine-Schnittstelle (MMC) eingegebenen Benutzerinformationen werden von der Ablaufsteuerung (A) interpretiert und führen zu einer Aktivierung der jeweils ausgewählten Objekte,
1.6 die aktivierten Objekte tauschen die gegenseitig benötigten Informationen über ihren Botschaftenmechanismus aus, wobei die aktivierten Objekte ihren Anteil zustandsabhängig direkt oder mittels weiterer Objekte zur Steuerdatenerzeugung beitragen und somit durch die netzwerkartige Verknüpfung der Objekte eine ablauffähige Funktionseinheit für die numerische Steuerung bilden,
1.7 die Ablaufsteuerung (A) selbst als Ojektklasse ausgebildet ist, deren Objekte über Methoden (A1 bis An) verfügen, die die zustandsabhängige Interpretation einer abstrakten Beschreibung des Bedienablaufs aus der steuerungsinternen Datenhaltung erlauben.

2. Numerische Steuerung nach Anspruch 1, wobei jedem Objekt (A,B,G,K,T,S) ein Visualisierungsteil (VT) zuordbar ist, bei dessen Aktivierung ein jeweiliges Objekt Visualisierungsanforderungen an die Bedienoberfläche der Mensch-Maschine-Schnittstelle (MMC) stellen kann oder die objekteigenen Daten optional editierbar darstellen kann.

3. Numerische Steuerung nach Anspruch 2, wobei alle Objektklassen unter Einbeziehung der Ablaufsteuerung in der steuerungsinternen Datenhaltung als abstrakte Datenmodelle ausgebildet sind, wobei die Datenmodelle mit abstrakten anwendungsspezifischen Datentypen ergänzbar, bzw. durch anwendungsspezifische Objektausprägungen modifizierbar sind.

4. Numerische Steuerung nach einem der vorstehenden Ansprüche, wobei die Objektkombinationen mit selektiven Zugriffsmechanismen versehen werden können.

## Claims

1. Numerical control for machine tools or robots, where an object-oriented programming takes place in that object classes are provided, of which in each case a number of objects can be formed, and whereby there is a message mechanism for communication with other objects, characterized by the following features:
1.1 a man-machine interface (MMC), a sequence control system (A) and object classes, formed in software or in software and hardware, for abstract processing (B), geometry (G), kinematic (K), technology data types (T) etc;
1.2 a specific object class for abstract control data types (S) in connection with an integrated numerical control kernel (CK) which can be constructed as object class,
1.3 whereby from each non-specific object class any number of objects can be formed, whereby each object has its own data range, a procedure part (PT) for carrying out either one or more processing methods (B1 to Bn), geometry methods (G1 to Gn), kinematic methods (K1 to Kn) or technology methods (T1 to Tn) etc. and a message mechanism for communication with other objects,
1.4 whereby from the object class of the control data types (S) any number of objects (S1 to Sn) can be formed which have one or more control data generation methods (S1 to Sn),
1.5 the user information entered by way of the man-machine interface (MMC) is interpreted by the sequence control system (A) and leads to an activation of the respectively selected objects,
1.6 the activated objects exchange the mutually required information by way of their message mechanism, whereby the activated objects contribute their portion in a state-dependent manner directly or by means of additional objects for control data generation and thereby by way of the network-like linking of the objects form a runnable function unit for the numerical control,
1.7 the sequence control system (A) itself is formed as object class, the objects of which have methods (A1 to An) which allow the state-dependent interpretation of an abstract description of the operational sequence from the control-internal data management.

2. Numerical control according to claim 1, whereby each object (A,B,G,K,T,S) can be allocated a visualization part (VT), upon the activation of which a respective object can make visualization demands of the operator environment of the man-machine interface (MMC) or can represent the object-specific data so that it can be edited optionally.

3. Numerical control according to claim 2, whereby all object classes including the sequence control system are constructed in the control-internal data management as abstract data models, whereby the data models can be supplemented with abstract application-specific data types, or can be modified by application-specific object instances.

4. Numerical control according to one of the above claims, whereby the object combinations can be provided with selective access mechanisms.

## Revendications

1. Commande numérique de machines-outils ou de robots, dans laquelle une programmation orientée objet s'effectue en prévoyant des classes d'objet par lesquelles un certain nombre d'objets peut être formé, et un mécanisme de communication de messages existant pour la communication avec d'autres objets, caractérisée par les dispositions suivantes:
1.1. une interface (MMC) homme-machine, une commande (A) de déroulement et des classes d'objets réalisées en logiciel ou en logiciel et en matériel, destinées à des types abstraits de données d'usinage (B), de géométrie (G), de cinématique (K), de technologie (T), etc.,
1.2. une classe spéciale d'objets destinée à des types (S) abstraits de données de commande, en liaison avec un noyau (CK) de commande numérique intégré, qui peut être réalisé sous forme de classe d'objets,
1.3. un nombre quelconque d'objets pouvant être formé par chaque classe d'objet qui n'est pas spéciale, chaque objet comportant une zone propre de données, une partie (P) de procédure servant à réaliser une ou plusieurs méthodes d'usinage (B1 à Bn), de géométrie (G1 à Gn), de cinématique (K1 à Kn) ou de technologie (T1 à Tn), etc. et un mécanisme de transmission de messages pour communiquer avec d'autres objets,
1.4. un nombre quelconque d'objets (S1 à Sn), qui comportent une ou plusieurs méthodes (S1 à Sn) de production de données de commande, pouvant être formé par la classe d'objets des types (S) de données de commande,
1.5. les information d'utilisateur, qui sont entrées par l'intermédiaire de l'interface (MMC) homme-machine, sont interprétées par la commande (A) de déroulement et provoquent une activation des objets sélectionnés,
1.6. les objets activés échangent les informations dont ils ont mutuellement besoin par l'intermédiaire de leur mécanisme de transmission de messages, les objets activés contribuant, directement ou au moyen d'autres objets, à la production de données de commande en fonction des états et formant ainsi, par la combinaison en réseau des objets, une unité fonctionnelle, pouvant se dérouler, pour la commande numérique,
1.7. la commande (A) de déroulement elle-même est réalisée en classe d'objets dont les objets disposent de méthodes (A1 à An) qui permettent l'interprétation, en fonction des états, d'une description abstraite du déroulement de commande à partir de la mémoire de données interne à la commande.

2. Commande numérique suivant la revendication 1, dans laquelle une partie (VT) de visualisation, lors de l'activation de laquelle un objet peut faire des demandes de visualisation à l'interface (MMC) homme-machine ou peut représenter les données propres à l'objet, en pouvant les éditer en option, peut être associée à chaque objet (A, B, G, K, T, S).

3. Commande numérique suivant la revendication 2, dans laquelle toutes les classes d'objets sont, tout en intégrant la commande de déroulement à la mémoire de données interne à la commande, réalisées sous forme de modèles abstraits de données, les modèles de données pouvant être complétés par des types de données abstraits spécifiques à l'utilisation et pouvant être modifiés par des versions d'objets spécifiques à l'utilisation.

4. Commande numérique suivant l'une des revendications précédentes, dans laquelle les combinaisons des objets peuvent être munies de mécanismes sélectifs d'accès.
